# EUROPEAN PATENT APPLICATION

(11) **EP 4 360 444 A1**
(43) Date of publication of application: **01.05.2024**
(21) Application number: 22842007.1
(22) Date of filing: 05.07.2022
(51) Int. Cl.: A01F 25/00, B65D 88/74, F25D 11/00, F25D 23/00

(54) **MANAGEMENT DEVICE, AND METHOD FOR CONTROLLING ENVIRONMENT WITHIN STOREHOUSE**

(30) Priority: 15.07.2021 JP 2021117421
(71) Applicant: DAIKIN INDUSTRIES, LTD., Osaka-Shi, Osaka 530-0001 (JP)
(72) Inventor: TSUJIMOTO, Yukako, Osaka-shi, Osaka 530-0001 (JP); NISHIMOTO, Motomi, Osaka-shi, Osaka 530-0001 (JP)
(74) Representative: Hoffmann Eitle
(86) International application number: PCT/JP2022/026745
(87) International publication number: WO 2023/286663

(57) **Abstract**

A method for controlling an environment in a storehouse includes monitoring a monitoring target (16) with a stored item (15) and the monitoring target (16) stored in the storehouse (S); and controlling the environment in the storehouse (S) based on a result of monitoring the monitoring target (16). the monitoring target (16) is disordered due to the environment earlier than the stored item (15).

## Description

### TECHNICAL FIELD

The present disclosure relates to a management device and a method for controlling the environment in a storehouse.

### BACKGROUND ART

A technique for controlling the environment in a storehouse storing items such as vegetables and fruits is known (e.g., Patent Document 1).

In the technique of Patent Document 1, a container (storehouse) stores a plurality of items and performs an air composition maintenance operation for maintaining the composition of the air in the container at a desired composition. In the air composition maintaining operation, a controller causes a gas supply device to switchably execute a first supply operation, a second supply operation, an outside air supply operation, and a standby operation. In the first supply operation, first low oxygen concentration air is supplied into the container. In the second supply operation, second low oxygen concentration air having a lower oxygen concentration than that of the first low oxygen concentration air is supplied into the container. In the outside air supply operation, outside air is supplied into the container. In the standby operation, supply of the low oxygen concentration air and the outside air into the container is stopped.

Typically, when a storehouse stores a plurality of items, and the environment (e.g., temperature, oxygen concentration, etc.) in the storehouse is controlled so that the plurality of stored items are not disordered (e.g., not discolored due to the Maillard reaction), the timing of starting the environment control in the storehouse has been determined by intuition, a rule of thumb, or the like of an operator.

### CITATION LIST

### PATENT DOCUMENT

PATENT DOCUMENT 1: Japanese Unexamined Patent Publication No. 2019-148413

### SUMMARY OF THE INVENTION

### TECHNICAL PROBLEM

If an operator determines a timing immediately before a stored item is disordered based on intuition, a rule of thumb, or the like, this determination largely depends on the sense of the operator. In this case, a result of determining such appropriate timing varies depending on how much the operator is skilled, and it is difficult for some operators to start controlling the environment in the storehouse at such appropriate timing.

The items stored in a storehouse are not uniformly disordered due to individual differences, and it is difficult to sense whether every single one of the stored items is disordered. If any one or more of the stored items are disordered, this may infect many of the rest of the stored items, and it is difficult to effectively enable the stored items to be less likely to be disordered.

It is an object of the present disclosure to effectively enable the stored items to be less likely to be disordered.

### SOLUTION TO THE PROBLEM

A first aspect of the present disclosure is directed to a method for controlling the environment in a storehouse. The method is for controlling the environment in a storehouse (S) storing a stored item (15). The method includes monitoring a monitoring target (16) with the stored item (15) and the monitoring target (16) stored in the storehouse (S); and controlling the environment in the storehouse (S) based on a result of monitoring the monitoring target (16). The monitoring target (16) is disordered due to the environment earlier than the stored item (15).

The first aspect effectively enables the stored item (15) to be less likely to be disordered.

A second aspect of the present disclosure is directed to a method for controlling the environment in a storehouse. The method is for controlling the environment in a storehouse (S) storing a stored item (15). The method includes monitoring a monitoring target (16) with the stored item (15) and the monitoring target (16) stored in the storehouse (S); and controlling the environment in the storehouse (S) based on a result of monitoring the monitoring target (16). The monitoring target (16) is located in a place including an environment where the monitoring target (16) is more likely to be disordered as compared to a place where the stored item (15) is located.

The second aspect effectively enables the stored item (15) to be less likely to be disordered.

A third aspect of the present disclosure is an embodiment of the first or second aspect. In the third aspect, the monitoring target (16) is of a different type from the stored item (15).

In the third aspect, the monitoring target (16) can be used which is more likely to be disordered than the stored item (15).

A fourth aspect of the present disclosure is an embodiment of any one of the first to third aspects. In the fourth aspect, the monitoring target (16) is disordered due to the Maillard reaction.

In the fourth aspect, the monitoring target can be monitored by checking whether the monitoring target (16) is disordered due to the Maillard reaction.

A fifth aspect of the present disclosure is an embodiment of any one of the first to fourth aspects. In the fifth aspect, the monitoring target (16) is one that was disordered in the past and then has been recovered from the disorder.

In the fifth aspect, the monitoring target (16), which was disordered in the past, can be easily disordered again.

A sixth aspect of the present disclosure is an embodiment of any one of the first to fifth aspects. In the sixth aspect, the monitoring target (16) is of a same type as the stored item (15).

In the sixth aspect, the monitoring target (16), which has been picked up from the plurality of stored items (15), can be easily prepared.

A seventh aspect of the present disclosure is an embodiment of any one of the first to sixth aspects. In the seventh aspect, the monitoring includes capturing an image (Z) of the monitoring target (16) and outputting a result of monitoring the monitoring target (16) based on the image (Z) of the monitoring target (16).

In the seventh aspect, the monitoring target can be monitored based on the image (Z) of the monitoring target (16).

An eighth aspect of the present disclosure is an embodiment of the seventh aspect. In the eighth aspect, the image (Z) of the monitoring target (16) is a fluorescence image of fluorescence emitted from a surface of the monitoring target (16) by irradiating the monitoring target (16) with light.

In the seventh aspect, the monitoring target can be monitored using the fluorescence image.

A ninth aspect of the present disclosure is an embodiment of any one of the first to eighth aspects. In the ninth aspect, the method includes performing a promotion process for promoting occurrence of a disorder of the monitoring target (16).

In the ninth aspect, the monitoring target (16) can be disordered effectively before the stored item (15) is disordered.

A tenth aspect of the present disclosure is an embodiment of the ninth aspect. In the tenth aspect, the monitoring includes monitoring the monitoring target (16) having undergone the promotion process.

In the tenth aspect, in the monitoring step, the monitoring target (16) can be disordered earlier than the stored items (15) more effectively.

An eleventh aspect of the present disclosure is an embodiment of the ninth or tenth aspect. In the eleventh aspect, the promotion process includes adding a pH-adjuster to the monitoring target (16).

In the eleventh aspect, a pH-adjuster is added to the monitoring target (16), thereby effectively promoting occurrence of a disorder of the monitoring target (16).

A twelfth aspect of the present disclosure is an embodiment of the ninth or tenth aspect. In the twelfth aspect, the promotion process includes adding a fat, a sugar, or an amino acid to the monitoring target (16).

In the twelfth aspect, a fat, a sugar, or an amino acid is added to the monitoring target (16), thereby effectively promoting occurrence of a disorder of the monitoring target (16).

A thirteenth aspect of the present disclosure is an embodiment of the ninth or tenth aspect. In the thirteenth aspect, the promotion process includes a dehydration process for reducing moisture in the monitoring target (16).

In the thirteenth aspect, a dehydration process for reducing moisture in the monitoring target (16) is performed, thereby effectively promoting occurrence of a disorder of the monitoring target (16).

A fourteenth aspect of the present disclosure is an embodiment of the ninth or tenth aspect. In the fourteenth aspect, the monitoring target (16) is a vegetable or a fruit, and the promotion process includes adding a pH-adjuster having a higher pH than that of the monitoring target (16) to the monitoring target (16).

In the fourteenth aspect, a pH-adjuster is added to a vegetable or a fruit, thereby effectively promoting occurrence of a disorder of the vegetable or the fruit.

A fifteenth aspect of the present disclosure is an embodiment of the ninth or tenth aspect. In the fifteenth aspect, the promotion process includes irradiating the monitoring target (16) with light.

In the fifteenth aspect, the monitoring target (16) is irradiated with light, thereby effectively promoting occurrence of a disorder of the monitoring target (16).

A sixteenth aspect of the present disclosure is directed to a management device. The management device manages a plurality of stored items (15) stored in a storehouse (S). The management device includes an imager (80), and a controller (110) having a plurality of operation modes. The plurality of operation modes include a first mode of determining the monitoring target (16), which is one of the plurality of stored items (15) that has been disordered first, based on an image (Z) of the plurality of stored items (15) captured by the imager (80).

In the sixteenth aspect, one of the plurality of the monitoring target (16) that is most likely to be disordered can be determined. Thus, a timing when the monitoring target (16) is disordered can be regarded as a sign showing that the stored items (15) other than the monitoring target (16) will be disordered, and thus the freshness of the stored items (15) can be sensed more accurately. This effectively enables the stored item (15) to be less likely to be disordered.

A seventeenth aspect of the present disclosure is an embodiment of the sixteenth aspect. In the seventeenth aspect, the plurality of operation modes include a second mode of controlling an environment in the storehouse (S) in order to recover the monitoring target (16) from the disorder caused in the first mode.

In the seventeenth aspect, in the second mode, the monitoring target (16) is recovered from the disorder, thereby enabling the monitoring target (16) to be more likely to be disordered.

An eighteenth aspect of the present disclosure is an embodiment of the seventeenth aspect. In the eighteenth aspect, the plurality of operation modes include a third mode of monitoring the monitoring target (16) based on the image (Z) of the monitoring target (16) captured by the imager (80), and controlling the environment in the storehouse (S) based on a result of monitoring the monitoring target (16).

In the sixteenth aspect, the environment in the storehouse (S) is controlled, thereby effectively enabling the stored item (15) to be less likely to be disordered.

A nineteenth aspect of the present disclosure is an embodiment of any one of the sixteenth to eighteenth aspects. In the nineteenth aspect, the management device includes a promotion mechanism (120) configured to perform a promotion process for promoting occurrence of a disorder of the monitoring target (16).

In the nineteenth aspect, the monitoring target (16) can be disordered effectively before the stored item (15) is disordered.

### BRIEF DESCRIPTION OF THE DRAWINGS

FIG. 1 is a schematic view of a container.
FIG. 2 shows a refrigerant circuit.
FIG. 3 shows a management device.
FIG. 4 shows the management device.
FIG. 5 shows a configuration for capturing a monitoring target using an imager.
FIG. 6 is a block diagram of a configuration of the management device.
FIG. 7 is a flowchart of a first example operation of a controller.
FIG. 8 shows the monitoring target.
FIG. 9 shows a fluorescence image.
FIG. 10 shows a mode of controlling an environment value in a container.
FIG. 11 shows a relationship between the percentage of healthy fruits and the time.
FIG. 12 is a flowchart of a second example operation of the controller.
FIG. 13 is a block diagram of a configuration of a variation of the management device.
FIG. 14 is a flowchart of a variation of the first example operation of the controller.
FIG. 15 is a flowchart of a variation of the second example operation of the controller.

### DESCRIPTION OF EMBODIMENTS

Embodiments of the present invention will be described in detail with reference to the drawings. Note that like reference characters denote the same or equivalent components in the drawings, and the detailed description thereof, the description of advantages associated therewith, and other descriptions will not be repeated.

### <First Embodiment>

A first embodiment of the present invention will be described.

### <Container>

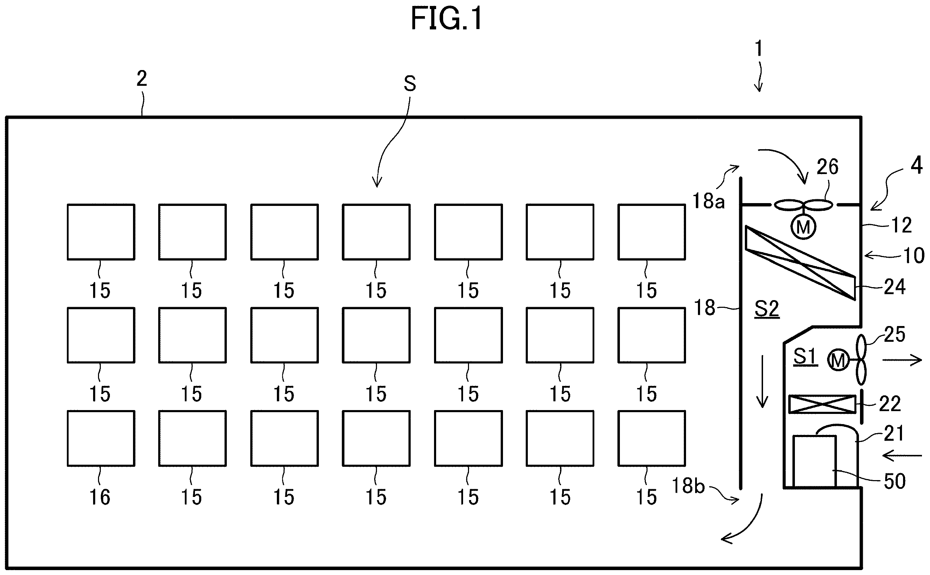

As shown in FIG. 1, a container (1) includes a container body (2) and a management device (4). The container (1) is used for marine transportation. The container body (2) is an example of a storehouse according to the present invention. In the following, the inside part of the container body (2) may be referred to as the container interior space (S).

### <Management Device>

The management device (4) manages stored items (15) in the container interior space (S). Managing the stored items (15) means controlling the environment (e.g., temperature, oxygen concentration, carbon dioxide concentration, etc.) in the container interior space (S) to keep the stored items (15) in the container interior space (S) from being disordered. The disorder means discoloration of the appearance due to the Maillard reaction or the like. The disorder is one from which a disordered item can be recovered by controlling the ambient environment (e.g., temperature, oxygen concentration, carbon dioxide concentration, etc.). The recovering means returning the disordered item to a state of the absence of discoloration as a disorder.

Examples of the stored items (15) and the monitoring target (16) include food such as fruits and vegetables, or plants such as fresh flowers. In the first embodiment, the stored items (15) and the monitoring target (16) are disordered due to the Maillard reaction (or, discolored due to the Maillard reaction). In the first embodiment, the monitoring target (16) is a substance that emits fluorescence when irradiated with light.

In the first embodiment, the monitoring target (16) is more likely to produce the Maillard reaction by the influence of the environment such as the temperature, the oxygen concentration, and the carbon dioxide concentration, and is disordered (or disordered by the environment) earlier than the stored items (15). The monitoring target (16) is of a different type from the stored items (15). Note that the monitoring target (16) may be of the same type as the stored items (15). The monitoring target (16) may be one that was disordered in the past and then has now been recovered from the disorder. This is because the monitoring target (16) that was disordered in the past and has now been recovered from the disorder is more likely to produce the Maillard reaction than the monitoring target (16) that has not been disordered.

In the container interior space (S), the monitoring target (16) may be located in a place including an environment where the monitoring target (16) is more likely to be disordered as compared to a place where the stored items (15) are located. In this case, in the container interior space (S), the monitoring target (16) is located so that an ambient environment (e.g., temperature) of the monitoring target (16) is different from an ambient environment of the stored items (15), thereby enabling the monitoring target (16) to be more likely to be disoredered. Thus, no individual difference is needed between the monitoring target (16) and the stored items (15) in terms of how much each of them is likely to be disordered (or, how much each of them is likely to produce the Maillard reaction).

In the first embodiment, the container interior space (S) stores a plurality of stored items (15) and one monitoring target (16). The container interior space (S) only needs to store at least one stored item (15) and at least one monitoring target (16).

The management device (4) includes a refrigeration apparatus (10) and an air composition adjustment device (or a controlled atmosphere (CA) system) (50).

The refrigeration apparatus (10) cools the air in the container interior space (S). The air composition adjustment device (50) introduces air into the container interior space (S), where the air have been adjusted to have a different composition from that of the outside air.

### <Refrigeration Apparatus>

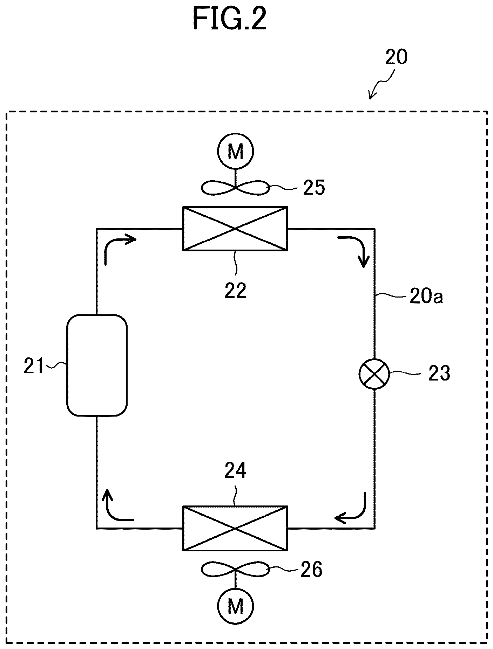

The refrigeration apparatus (10) includes a refrigeration casing (12) and a refrigerant circuit (20) (see FIG. 2) that performs a refrigeration cycle.

The container body (2) has a shape of an elongated rectangular parallelepiped box having end surfaces, one of which opens. The refrigeration casing (12) is attached to the periphery of the opening of the container body (2) to close the opening end of the container body (2).

A lower portion of the refrigeration casing (12) protrudes towards the inside of the container body (2). Accordingly, the lower portion of the refrigeration casing (12) has a first storage space (S 1) on the external side of the container body (2) .

The first storage space (S1) stores a compressor (21), a condenser (22), the air composition adjustment device (50), and an external fan (25). The condenser (22) is disposed in the middle of the first storage space (S1) in the vertical direction. The compressor (21) and the air composition adjustment device (50) are arranged below the condenser (22). The external fan (25) is disposed above the condenser (22).

An upper portion of the refrigeration casing (12) has a second storage space (S2) on the internal side of the container body (2). The second storage space (S2) stores an evaporator (24) and an internal fan (26). The internal fan (26) is disposed above the evaporator (24).

A partition plate (18) is disposed in the container body (2). The partition plate (18) is disposed to face an inner surface of the refrigeration casing (12). The partition plate (18) separates the container body (2) into the container interior space (S) for storing the stored items (15) and the second storage space (S2).

A suction port (18a) is provided between the upper end of the partition plate (18) and the ceiling surface of the container interior space (S). Inside air of the container body (2) is taken into the second storage space (S2) through the suction port (18a).

A blow-out port (18b) is provided between the lower end of the partition plate (18) and the bottom surface of the container interior space (S). The blow-out port (18b) blows the air cooled by the refrigeration apparatus (10) into the container interior space (S).

### <Operation of Refrigeration Apparatus>

As illustrated in FIG. 2, the refrigerant circuit (20) is a closed circuit in which the compressor (21), the condenser (22), an expansion valve (23), and the evaporator (24) are connected together in this order by a refrigerant pipe (20a). Refrigerant circulates in the refrigerant circuit (20) to perform a vapor compression refrigeration cycle.

The external fan (25) sends air outside of the container body (2) to the condenser (22). In the condenser (22), heat is exchanged between the refrigerant compressed in the compressor (21) and flowing inside the condenser (22) and the outside air sent to the condenser (22) by the external fan (25).

The internal fan (26) sucks the air in the container interior space (S) through the suction port (18a) and blows the air into the evaporator (24). In the evaporator (24), heat is exchanged between the refrigerant decompressed by the expansion valve (23) and flowing through the evaporator (24) and the inside air sent to the evaporator (24) by the internal fan (26), thereby cooling the inside air.

The inside air cooled by the evaporator (24) is blown again into the container interior space (S) through the blow-out port (18b). Accordingly, the air in the container interior space (S) is cooled.

The refrigeration apparatus (10) performs the cooling operation of cooling the air in the container interior space (S) by circulating the refrigerant among the compressor (21), the condenser (22), the expansion valve (23), and the evaporator (24) using the refrigerant circuit (20) so as to control the temperature in the container interior space (S).

### <Air Composition Adjustment Device>

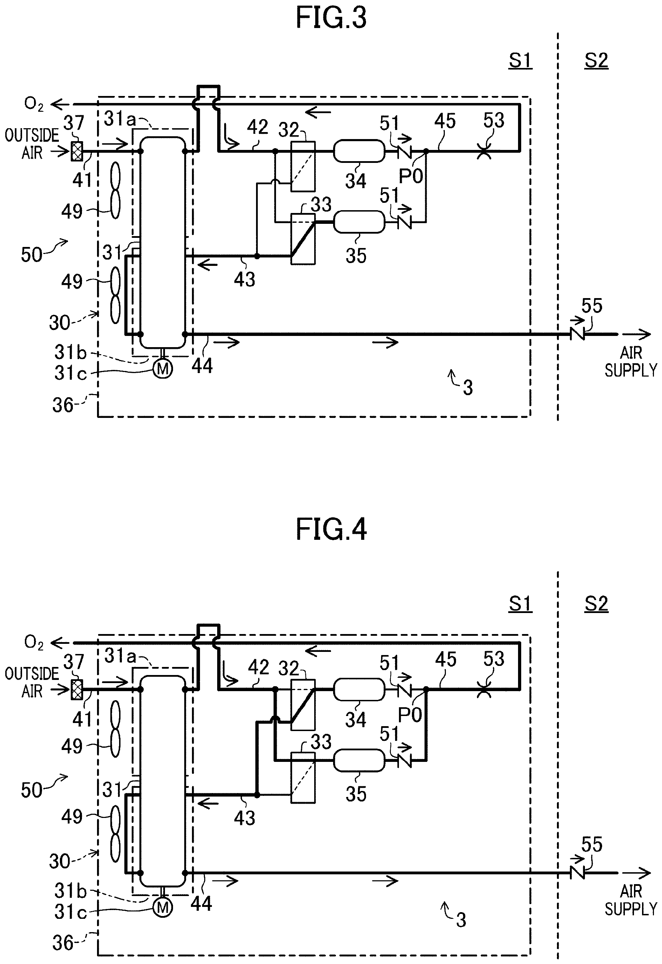

As shown in FIG. 3, the air composition adjustment device (50) includes a gas supply unit (30). The air composition adjustment device (50) controls the oxygen concentration and the carbon dioxide concentration in the container interior space (S). The term "concentration" to be used in the following description always indicates a "volumetric concentration."

The gas supply unit (30) is a unit for generating component-adjusted air. In this embodiment, the gas supply unit (30) generates nitrogen-enriched air with a low oxygen concentration to be supplied into the container interior space (S). The gas supply unit (30) employs vacuum pressure swing adsorption (VPSA).

The gas supply unit (30) has an air pump (31), a first directional control valve (32), a second directional control valve (33), and an air circuit (3). A first adsorption column (34) and a second adsorption column (35) are connected to the air circuit (3). An adsorbent for adsorbing a nitrogen component in the air is provided in each of the first adsorption column (34) and the second adsorption column (35). The components of the air circuit (3) are housed in a unit case (36).

The air pump (31) has a first pump mechanism (31a) and a second pump mechanism (31b). The first pump mechanism (31a) constitutes a compression pump mechanism configured to compress and discharge sucked air. The second pump mechanism (31b) constitutes a decompression pump mechanism. The first pump mechanism (31a) and the second pump mechanism (31b) are connected to the drive shaft of a motor (31c).

Components, such as the air pump (31), are connected to the air circuit (3). The air circuit (3) includes an outside air passage (41), a compression passage (42), a decompression passage (43), a supply passage (44), and an oxygen discharge passage (45).

The outside air passage (41) passes through the unit case (36) from the inside to the outside. One end of the outside air passage (41) is connected to a suction port of the first pump mechanism (31a). A membrane filter (37) is provided at the other end of the outside air passage (41).

One end of the compression passage (42) is connected to a discharge port of the first pump mechanism (31a). The other end of the compression passage (42) is divided into two branches, which are connected to the first and second directional control valves (32, 33), respectively.

One end of the decompression passage (43) is connected to a suction port of the second pump mechanism (31b). The other end of the decompression passage (43) is divided into two branches, which are connected to the first and second directional control valves (32, 33), respectively. One end of the supply passage (44) is connected to a discharge port of the second pump mechanism (31b). The other end of the supply passage (44) is open in the second storage space (S2) of the container body (2). A check valve (55) is provided at the other end portion of the supply passage (44). The check valve (55) allows the air to flow toward the second storage space (S2) and prevents backflow of the air.

Two fans (49) are provided near the lateral side of the air pump (31). The fans (49) blow air toward the air pump (31) to cool the air pump (31).

The first pump mechanism (31a), which serves as the compression pump mechanism, supplies compressed air to one of the first adsorption column (34) or the second adsorption column (35), thereby performing an adsorption operation of causing the nitrogen component in the compressed air to be adsorbed on the adsorbent in the adsorption column.

The second pump mechanism (31b), which serves as the decompression pump mechanism, sucks air from inside of the other one of the first adsorption column (34) or the second adsorption column (35), thereby performing a desorption operation of desorbing the nitrogen component adsorbed on the adsorbent in the adsorption column. The desorption operation generates nitrogen-enriched air.

The adsorption operation and the desorption operation are alternately performed in the first adsorption column (34) and the second adsorption column (35). The supply passage (44) is a passage for supplying the nitrogen-enriched air generated by the desorption operation into the container body (2).

One end of the oxygen discharge passage (45) is connected to other end portions (outflow ports during compression) of the first adsorption column (34) and the second adsorption column (35). The oxygen discharge passage (45) guides the oxygen-enriched air generated from the compressed outside air to the outside of the container body (2).

The one end of the oxygen discharge passage (45) is divided into two branches, which are connected to the other end portions of the first and second adsorption columns (34, 35), respectively. The other end of the oxygen discharge passage (45) opens to the outside of the gas supply unit (30), i.e., to the outside of the container body (2). A check valve (51) is provided at each of branch portions where the oxygen discharge passage (45) is connected to the first adsorption column (34) and the second adsorption column (35). The check valve (51) prevents backflow of air from the oxygen discharge passage (45) to the first adsorption column (34) and the second adsorption column (35).

An orifice (53) is provided at a midpoint of the oxygen discharge passage (45). The orifice (53) decompresses the oxygen-enriched air having flowed out of the first and second adsorption columns (34, 35) before the oxygen-enriched air is discharged to the outside. The oxygen discharge passage (45) discharges the oxygen-enriched air generated in the first and second adsorption columns (34, 35) to the outside.

The first directional control valve (32) and the second directional control valve (33) are disposed between the air pump (31) and the first adsorption column (34) and between the air pump (31) and the second adsorption column (35), respectively. The first directional control valve (32) and the second directional control valve (33) switch the connection states between the air pump (31) and the first adsorption column (34) and between the air pump (31) and the second adsorption column (35), respectively, between two connection states (first and second connection states) to be described later.

The first directional control valve (32) is connected to one end portions of the compression passage (42), the decompression passage (43), and the first adsorption column (34). The compression passage (42) is connected to the discharge port of the first pump mechanism (31a). The decompression passage (43) is connected to the suction port of the second pump mechanism (31b). The one end portion of the first adsorption column (34) is an inflow port during compression.

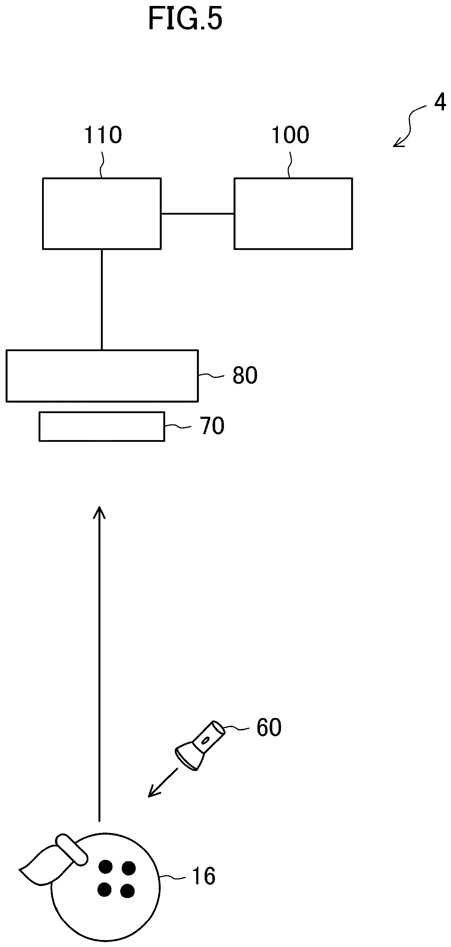

The first directional control valve (32) switches between a first state (the state illustrated in FIG. 4) and a second state (the state illustrated in FIG. 5). In the first state, the first adsorption column (34) communicates with the discharge port of the first pump mechanism (31a) and is shut off from the suction port of the second pump mechanism (31b). In the second state, the first adsorption column (34) communicates with the suction port of the second pump mechanism (31b) and is shut off from the discharge port of the first pump mechanism (31a).

The second directional control valve (33) is connected to one end portions of the compression passage (42), the decompression passage (43), and the second adsorption column (35).

The second directional control valve (33) switches between the first state (the state illustrated in FIG. 3) and the second state (the state illustrated in FIG. 4). In the first state, the second adsorption column (35) communicates with the suction port of the second pump mechanism (31b) and is shut off from the discharge port of the first pump mechanism (31a). In the second state, the second adsorption column (35) communicates with the discharge port of the first pump mechanism (31a) and is shut off from the suction port of the second pump mechanism (31b).

### <Operation of Air Composition Adjustment Device>

When both of the first directional control valve (32) and the second directional control valve (33) are set to be in the first state, the air circuit (3) is switched to a first connection state (see FIG. 3). In the first connection state, the discharge port of the first pump mechanism (31a) is connected to the first adsorption column (34), and the suction port of the second pump mechanism (31b) is connected to the second adsorption column (35). In the first connection state, the adsorption operation is performed to cause the nitrogen component in outside air to be adsorbed on the adsorbent in the first adsorption column (34), and a desorption operation is performed to desorb the nitrogen component adsorbed on the adsorbent in the second adsorption column (35).

When both of the first directional control valve (32) and the second directional control valve (33) are set to be in the second state, the air circuit (3) is switched to a second connection state (see FIG. 4). In the second connection state, the discharge port of the first pump mechanism (31a) is connected to the second adsorption column (35), and the suction port of the second pump mechanism (31b) is connected to the first adsorption column (34). In the second connection state, the adsorption operation is performed on the second adsorption column (35), and the desorption operation is performed on the first adsorption column (34).

When the air pump (31) supplies the compressed outside air to the first adsorption column (34) and the second adsorption column (35) to compress the inside of these columns (34) and (35), the nitrogen component in the outside air is adsorbed on the adsorbent. This produces oxygen-enriched air with a smaller amount of the nitrogen component than the outside air. The oxygen-enriched air has a lower nitrogen concentration and a higher oxygen concentration than the outside air. The oxygen-enriched air is discharged to the outside through the oxygen discharge passage (45).

On the other hand, when the air pump (31) sucks the air from the first adsorption column (34) and the second adsorption column (35) to decompress the inside of these columns (34) and (35), the nitrogen component adsorbed on the adsorbent is desorbed. This produces nitrogen-enriched air with a greater amount of the nitrogen component than the outside air. The nitrogen-enriched air has a higher nitrogen concentration and a lower oxygen concentration than the outside air. The nitrogen-enriched air is sucked into the second pump mechanism (31b), compressed, and discharged to the supply passage (44).

The air composition adjustment device (50) controls the oxygen concentration and the carbon dioxide concentration in the container interior space (S) by switching the first and second directional control valves (32) and (33) (see FIGS. 3 and 4).

### <Other Configurations>

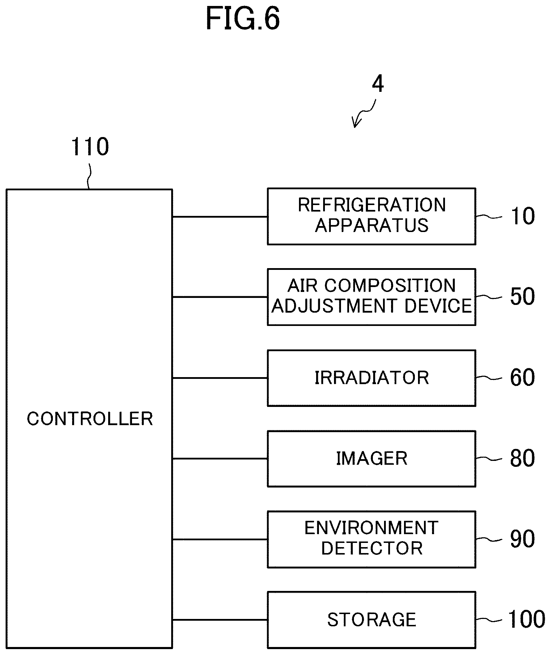

The management device (4) will be further described with reference to FIGS. 5 and 6.

As shown in FIGS. 5 and 6, the management device (4) further includes an irradiator (60), an extractor (70), an imager (80), an environment detector (90), a storage (100), and a controller (110).

The irradiator (60) irradiates the monitoring target (16) with light. In the first embodiment, the irradiator (60) emits ultraviolet rays. The ultraviolet rays emitted by the irradiator (60) have a wavelength of 200 nm or more and 400 nm or less, for example. The light emitted from the irradiator (60) is visible light, for example. Examples of the irradiator (60) include a light source that emits ultraviolet rays. Examples of the light source include a light source element, such as a light-emitting diode (LED) and a laser diode, an excimer lamp, an ultraviolet lamp, and a mercury lamp.

The monitoring target (16) is irradiated with the ultraviolet light from the irradiator (60) and thus emits fluorescence from the surface.

The extractor (70) extracts fluorescence with a predetermined wavelength among the fluorescence emitted from the surface of the monitoring target (16). The predetermined wavelength is a wavelength of 500 nm or more and 600 nm or less, for example. Examples of the extractor (70) include a band-pass filter.

The fluorescence extracted by the extractor (70) may be hereinafter referred to as the "predetermined fluorescence." The predetermined fluorescence varies depending on the state of the surface of the monitoring target (16) (e.g., whether the surface is disordered or not) and thus represents the state of the surface of the monitoring target (16).

Examples of the imager (80) include a camera. The imager (80) captures an image of the predetermined fluorescence extracted by the extractor (70). As described above, the predetermined fluorescence represents the state of the surface of the monitoring target (16). Thus, the image of the predetermined fluorescence corresponds to the image of the monitoring target (16).

The environment detector (90) detects physical quantities indicating the environment in the container interior space (S). The environment detector (90) includes at least one of a temperature sensor that detects the temperature in the container interior space (S), an oxygen concentration sensor that detects the oxygen concentration in the container interior space (S), and a carbon dioxide concentration sensor that detects the carbon dioxide concentration in the container interior space (S).

The storage (100) includes a main memory (e.g., a semiconductor memory), such as a flash memory, a read only memory (ROM), and a random access memory (RAM), and may further include an auxiliary memory (e.g., a hard disk drive, a solid state drive (SSD), a secure digital (SD) memory card, or a universal serial bus (USB) flash memory). The storage (100) stores various computer programs executable by the controller (110).

The controller (110) includes a processor, such as a central process unit (CPU) or a microprocessor unit (MPU). The controller (110) controls the components (e.g., the refrigeration apparatus (10), the air composition adjustment device (50), the irradiator (60), the imager (80), and the environment detector (90)) of the management device (4) by executing computer programs stored in the storage (100).

### <First Example Operation of Controller>

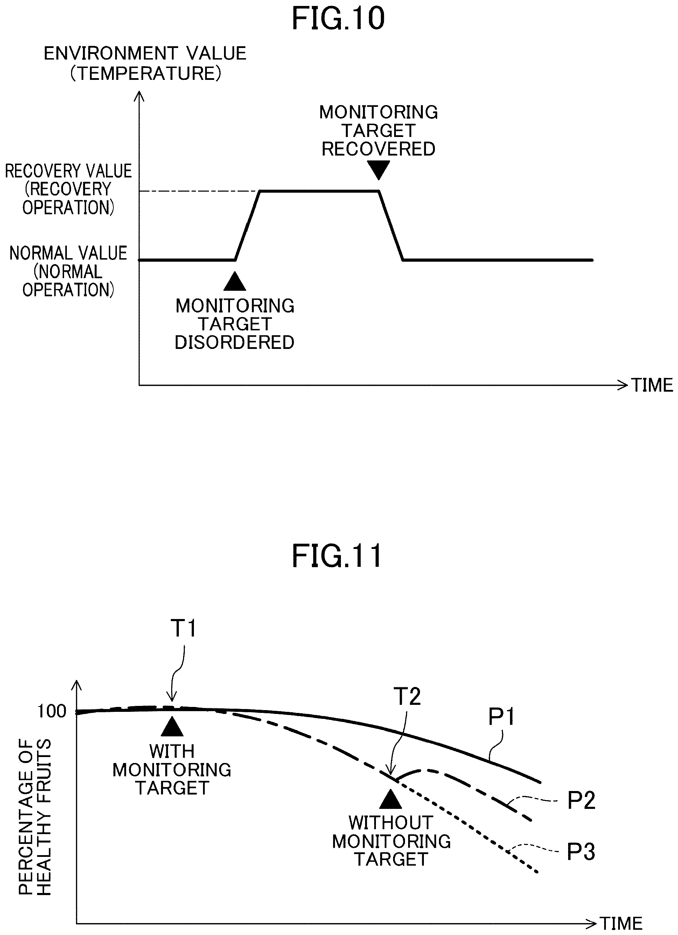

At the start of a first example operation of the controller (110), the controller (110) performs a normal operation (see FIG. 10). The normal operation is an operation mode of the controller (110) when the container interior space (S) stores the items (15). In the normal operation, the temperature or the like in the container interior space (S) is set to a value (a normal value) suitable for storing the items (15). The temperature in the container interior space (S) in the normal operation has a range of e.g., the freezing point or more of the stored items (15) and a literature value or less causing less generation of disorders.

As shown in FIGS. 1, 5, 6, and 7, in step S11, the controller (110) performs a monitoring process. The monitoring process is a process of capturing an image of the monitoring target (16) using the imager (80) with the container interior space (S) storing the stored items (15) and the monitoring target (16), and monitoring the monitoring target (16) based on the image of the monitoring target (16). Monitoring the monitoring target (16) means monitoring whether a surface of the monitoring target (16) is disordered or not. At this time, the imager (80) captures an image of one of the surfaces of the monitoring target (16) that has the largest disordered area, and the controller (110) monitors the surface having the largest disordered area as a sensing surface.

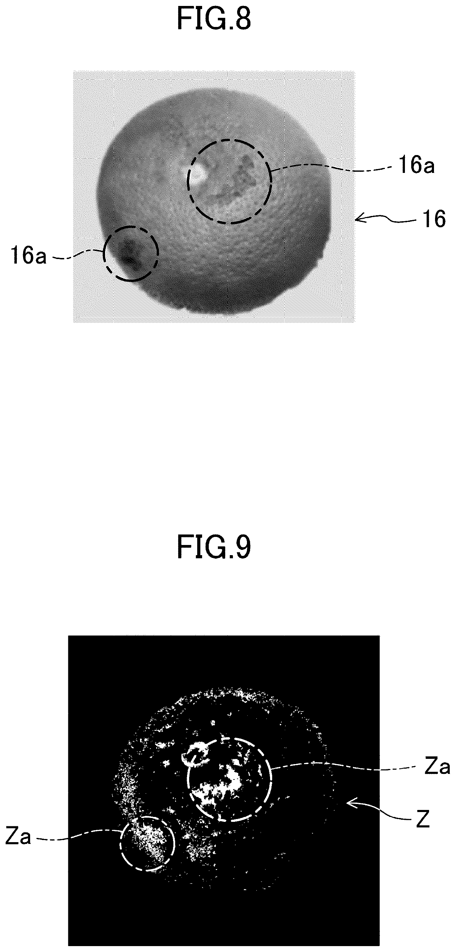

FIG. 8 shows the monitoring target (16) and a disorder (16a) generated on the surface of the monitoring target (16). FIG. 9 shows an image (Z) of the monitoring target (16) and an image (Za) of the disorder (16a) captured by the imager (80). As shown in FIG. 9, the area of the image (Za) of the disorder (16a) in the image (Z) of the monitoring target (16) has a different color shade from the other areas. This makes the location of the disorder (16a) in the monitoring target (16) visible based on the image (Z) of the monitoring target (16) captured by the imager (80).

As shown in FIGS. 1, 5, 6, and 7, in step S12, the controller (110) determines whether the monitoring target (16) is disordered or not based on the image of the monitoring target (16) captured by the imager (80). The controller (110) determines whether the monitoring target (16) is disordered or not based on, e.g., a result of comparison between a pixel value of an image of the monitoring target (16) captured by the imager (80) and a pixel value of an image of a disorder (disordered pixel value). The pixel value includes an L*-value, an a*-value, a b*-value, an R-value, a G-value, a B-value, and the like. The information about the disordered pixel value is determined in advance and stored in the storage (100).

For example, the controller (110) determines that the monitoring target (16) is disordered if the image of the monitoring target (16) includes a first predetermined number or more of pixels having the disordered pixel value, and determines that the monitoring target (16) is not disordered if the image of the monitoring target (16) does not include the first predetermined number or more of pixels having the disordered pixel value.

If the controller (110) determines that the monitoring target (16) is not disordered (No in step S12), the process proceeds to step S11. In this case, the monitoring process continues. If the controller (110) determines that the monitoring target (16) is disordered (Yes in step S12), the process proceeds to step S13.

In step S13, the controller (110) switches the operation mode from the normal operation to a recovery operation. The recovery operation is an operation mode of the refrigeration apparatus (10) for recovering the monitoring target (16) from the disorder.

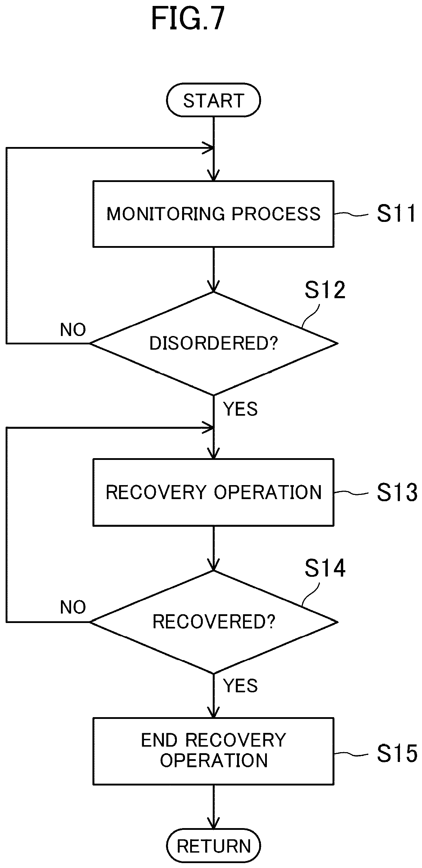

As shown in FIGS. 7 and 10, the controller (110) changes the environment value of the container interior space (S) from the normal value to the recovery value when the recovery operation is performed. The environment value is a value representing the environment that influences an occurrence of disorder and a recovery of the monitoring target (16), and specifically including a temperature, an oxygen concentration, a carbon dioxide concentration, and the like. The normal value is the environment value of the container interior space (S) in the normal operation. The recovery value is the environment value of the container interior space (S) in the recovery operation. The normal value and the recovery value are determined in advance and stored in the storage (100) (see FIG. 6).

In the first embodiment, the environment value employs a temperature, about which the normal value and the recovery value are set. In this case, in the recovery operation, the temperature in the container interior space (S) is changed from the normal value to the recovery value. In this case, the controller (110) controls the refrigeration apparatus (10) (see FIGS. 2 and 6) to change the temperature in the container interior space (S) between the normal value and the recovery value.

The environment value is not limited to a temperature. The environment value may employ at least one of a temperature, an oxygen concentration, and a carbon dioxide concentration.

For example, if the environment value employs an oxygen concentration or a carbon dioxide concentration, the normal value and the recovery value are set for the oxygen concentration or the carbon dioxide concentration. In this case, the controller (110) controls the air composition adjustment device (50) (see FIGS. 3, 4, and 6) to change the oxygen concentration or the carbon dioxide concentration in the container interior space (S) between the normal value and the recovery value.

In step S14, the controller (110) determines whether the monitoring target (16) has recovered from the disorder or not based on the image of the monitoring target (16) captured by the imager (80). For example, the controller (110) determines that the monitoring target (16) has recovered from the disorder if determining that the image of the monitoring target (16) includes a second predetermined number or less of pixels having a disordered pixel value. In contrast, the controller (110) determines that the monitoring target (16) has not recovered from the disorder if determining that the image of the monitoring target (16) does not include a second predetermined number or less of pixels having a disordered pixel value. The second predetermined number is smaller than the first predetermined number (see step S12) (second predetermined number < first predetermined number).

If the controller (110) determines that the monitoring target (16) has not recovered from the disorder (No in step S14), the process proceeds to step S13. In this case, the recovery operation continues. If the controller (110) determines that the monitoring target (16) has recovered from the disorder (Yes in step S14), the process proceeds to step S15.

In step S15, the controller (110) ends the recovery operation. In this case, the controller (110) returns the environment value from the recovery value to the normal value and performs the normal operation (see FIG. 10). After the end of the process shown in step S15, the process returns to step S11.

### <Advantages of Monitoring Target>

FIG. 11 shows a coordinate system with the percentage of healthy fruits on the vertical axis and the time on the horizontal axis. The percentage of the sound fruits is a percentage of those not disordered out of all the stored items (15) in the container interior space (S).

The coordinate system of FIG. 11 contains a line (P1), a line (P2), and a line (P3).

The line (P1) indicated by a solid line shows a relationship between the percentage of healthy fruits and the time, where the stored items (15) are managed with the monitoring target (16). In the line (P1), the stored items (15) are managed with the monitoring target (16) that is more likely to be disordered, similarly to the first embodiment of the present invention. In the line (P1), it is determined at a time T1 that the monitoring target (16) is disordered, and then the recovery operation (see FIG. 10) starts which changes the environment value from the normal value to the recovery value. In the line (P1), the monitoring target (16) that is more likely to be disordered than the stored items (15) is focused. Thus, the recovery operation can start with an early timing when the monitoring target (16) is disordered but the stored items (15) are not disordered (i.e., a timing immediately before the percentage of the healthy fruits starts to drop from about 100%). This can effectively prevent the stored items (15) from being disordered. Then, this enables effective reduction in the drop of the percentage of the healthy fruits with the lapse of time.

The line (P2) indicated by a dot-dashed line shows a relationship between the percentage of healthy fruits and the time, where the stored items (15) are managed without the monitoring target (16), i.e., where the plurality of stored items (15) in the container interior space (S) are monitored as a whole to determine whether the stored items (15) are disordered or not. In the line (P2), the plurality of stored items (15) are monitored as a whole, while the monitoring target (16) that is more likely to be disordered than the stored items (15) is neither particularly focused nor monitored as in the line (P1). Thus, in the line (P2), the presence of a disorder is determined at a time T2, which is a timing behind the time T1 of the line (P1), and then the recovery operation (see FIG. 10) starts. Consequently, in the line (P2), the start timing of the recovery operation is behind that in the line (P1), and the recovery operation starts at a timing (the time T2) when the percentage of healthy fruits has dropped to some extent. Thus, the percentage of healthy fruits is more likely to drop than that in the line (P1).

The line (P3) indicated by a dotted line shows a relationship between the percentage of healthy fruits and the time, where the recovery operation shown in FIG. 10 is not performed and the environment value in the container interior space (S) is maintained at the normal value. In this case, the percentage of healthy fruits is not temporarily recovered at the time T2 of the recovery operation as in the line (P2), and thus continues to drop.

Among the line (P1) to the line (P3) described above, in the line (P1) (the first embodiment of the present invention) where the stored items (15) are managed with the monitoring target (16) that is more likely to be disordered, the recovery operation (see FIG. 10) can start at an earlier timing (the time T1), and this enables effective reduction in the drop of the percentage of the healthy fruits.

### <Advantages of First Embodiment>

As described above, the controller (110) monitors the monitoring target (16) with the stored items (15) and the monitoring target (16) stored in the container interior space (S). The controller (110) controls the environment in the container interior space (S) based on the result of monitoring the monitoring target (16). The monitoring target (16) is disordered due to the environment in the container interior space (S) earlier than the stored items (15). Thus, the control of the environment in the container interior space (S) is started when it is confirmed that the monitoring target (16) is disordered. That is, the control of the environment in the container interior space (S) can be started at a timing immediately before the stored items (15) are disordered. This effectively enables the stored items (15) in the container interior space (S) to be less likely to be disordered.

In the container interior space (S), the monitoring target (16) may be located in a place including an environment where the monitoring target (16) is more likely to be disordered as compared to a place where the stored items (15) are located. Accordingly, the monitoring target (16) is disordered due to the environment in the container interior space (S) earlier than the stored items (15). Consequently, the monitoring target (16) is monitored so that the control of the environment in the container interior space (S) can be started at a timing immediately before the stored items (15) are disordered, and this effectively enables the stored items (15) in the container interior space (S) to be less likely to be disordered.

### <Second Embodiment>

A second embodiment of the present invention will be described.

### <Second Example Operation of Controller>

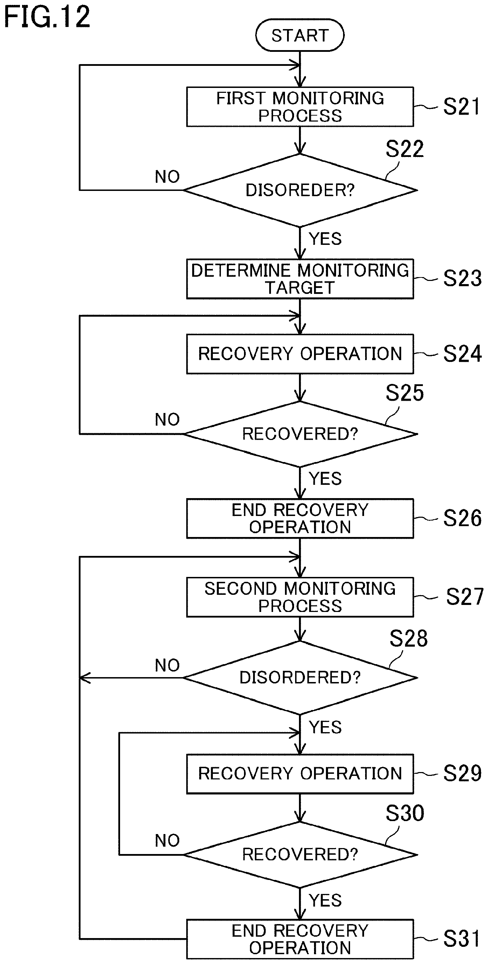

Unlike the first example operation of the controller (110) of the first embodiment (see FIGS. 1 and 7), the second example operation of the controller (110) starts with the container interior space (S) that stores the plurality of stored items (15) but does not store the monitoring target (16). The second example operation of the controller (110) includes step S23 described later where the monitoring target (16) is determined among the stored items (15) (see FIG. 12). The second example operation of the controller (110) will be described below.

At the start of the second example operation of the controller (110), the controller (110) performs the normal operation (see FIG. 10).

As shown in FIGS. 1, 5, 6, and 12, in step S21, the controller (110) performs a first monitoring process. The first monitoring process is a process of capturing an image of the plurality of stored items (15) using the imager (80) with the plurality of stored items (15) stored in the container interior space (S), and then monitoring the plurality of stored items (15) based on the image of the stored items (15). Monitoring the plurality of stored items (15) means monitoring whether any one of the plurality of stored items (15) is disordered or not.

In step S22, the controller (110) determines whether any one of the plurality of stored items (15) is disordered or not based on the image of the plurality of stored items (15) captured by the imager (80).

If the controller (110) determines that none of the plurality of stored items (15) are disordered (No in step S22), the process proceeds to step S21. In this case, the first monitoring process continues. If the controller (110) determines that any one of the plurality of stored items (15) is disordered (Yes in step S22), the process proceeds to step S23.

In step S23, the controller (110) determines the stored item (15) regarded as being disordered in step S22 as the monitoring target (16). The monitoring target (16) is one of the plurality of stored items (15) that has been disordered first.

In step S24, the controller (110) switches the operation mode from the normal operation to the recovery operation in order to recover the monitoring target (16) from the disorder (see FIG. 10).

In step S25, the controller (110) determines whether the monitoring target (16) has recovered from the disorder or not based on the image of the monitoring target (16) captured by the imager (80). If the controller (110) determines that the monitoring target (16) has not recovered from the disorder (No in step S25), the process proceeds to step S24. In this case, the recovery operation continues. If the controller (110) determines that the monitoring target (16) has recovered from the disorder (Yes in step S25), the process proceeds to step S26.

In step S26, the controller (110) ends the recovery operation and performs the normal operation (see FIG 10).

In step S27, the controller (110) performs a second monitoring process based on the image of the monitoring target (16) captured by the imager (80). The second monitoring process is a process of monitoring the monitoring target (16) determined in step S23.

In step S28, the controller (110) determines whether the monitoring target (16) is disordered or not based on the image of the monitoring target (16) captured by the imager (80). If the controller (110) determines that the monitoring target (16) is not disordered (No in step S28), the process proceeds to step S27. In this case, the second monitoring process continues. If the controller (110) determines that the monitoring target (16) is disordered (Yes in step S28), the process proceeds to step S29.

In step S29, the controller (110) switches the operation mode from the normal operation to the recovery operation (see FIG. 10).

In step S30, the controller (110) determines whether the monitoring target (16) has recovered from the disorder or not based on the image of the monitoring target (16) captured by the imager (80). If the controller (110) determines that the monitoring target (16) has not recovered from the disorder (No in step S30), the process proceeds to step S29. In this case, the recovery operation continues. If the controller (110) determines that the monitoring target (16) has recovered from the disorder (Yes in step S30), the process proceeds to step S31.

In step S31, the controller (110) ends the recovery operation and performs the normal operation (see FIG 10). After the end of the process shown in step S31, the process returns to step S27.

### <Advantages of Second Embodiment>

As described above, based on the image of the plurality of stored items (15) captured by the imager (80), the controller (110) operates in the first mode to determine the monitoring target (16), which is one of the plurality of stored items (15) that has been disordered first (step S23). Consequently, a timing when the monitoring target (16) is disordered can be regarded as a sign showing that the stored items (15) other than the monitoring target (16) will be disordered, and thus the freshness of the stored items (15) can be sensed more accurately.

The controller (110) operates in the second mode to control the environment in the container interior space (S) in order to recover the monitoring target (16) from the disorder caused in the first mode, (step S24). Accordingly, the monitoring target (16) is recovered from the disorder in the second mode, such that the monitoring target (16) can be more likely to be disordered. The controller (110) operates in the third mode to monitor the monitoring target (16) based on the image of the monitoring target (16) captured by the imager (80), and control the environment in the container interior space (S) based on the result of monitoring the monitoring target (16) (step S27). Thus, the environment in the container interior space (S) is controlled, thereby effectively enabling the stored items (15) to be less likely to be disordered.

### <Third Embodiment>

A second embodiment of the present invention will be described.

### <Additional Configuration of Management Device>

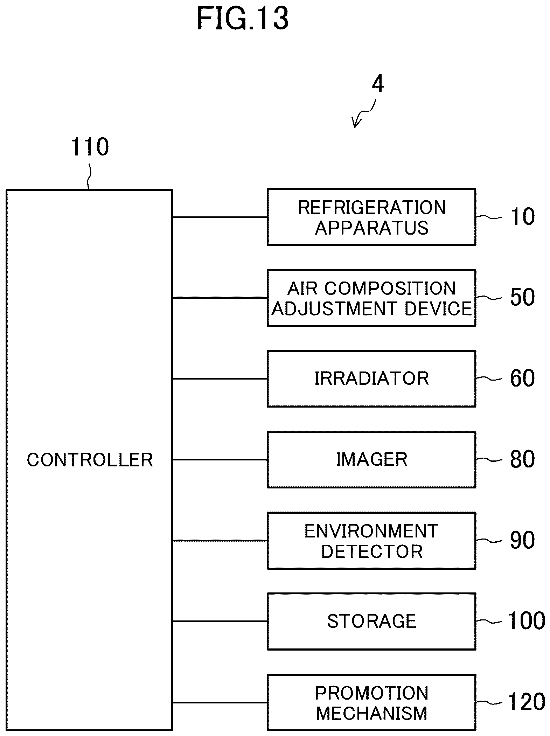

As shown in FIG. 13, the management device (4) further includes a promotion mechanism (120) in addition to the various components (the irradiator (60), the extractor (70), the imager (80), the environment detector (90), the storage (100), the controller (110), and the like) described in the first embodiment.

The promotion mechanism (120) performs a promotion process for promoting occurrence of a disorder of the monitoring target (16). Promoting occurrence of a disorder means making the monitoring target (16) disordered earlier. The monitoring target (16) having undergone the promotion process is disordered earlier than the monitoring target (16) having not undergone the promotion process.

### <First Example of Promotion Process>

In a first example of the promotion process, a pH-adjuster is added to the monitoring target (16) so that the pH of the monitoring target (16) is adjusted toward alkaline as compared to the pH of the monitoring target (16) that the pH-adjuster has not been added to. The monitoring target (16) with the pH adjusted toward alkaline is more likely to produce the Maillard reaction, thereby promoting occurrence of a disorder of the monitoring target (16).

The pH-adjuster includes, e.g., at least one of basic amino acids (lysine, histidine, and arginine), a phosphoric acid, ammonium phosphate, potassium carbonate, and sodium bicarbonate. The type of the pH-adjuster added to the monitoring target (16) is determined in accordance with the type of the monitoring target (16).

### <Second Example of Promotion Process>

In a second example of the promotion process, a fat, a sugar, or an amino acid is added to the monitoring target (16) so that the water activity Aw of the monitoring target (16) is adjusted to a value within a first predetermined range. The value within the first predetermined range is a value at which the Maillard reaction of the monitoring target (16) proceeds more quickly than that of the monitoring target (16) that a fat, a sugar, or an amino acid has not been added to.

### <Third Example of Promotion Process>

In a third example of the promotion process, a dehydration process of reducing the moisture in the monitoring target (16) is performed so that the water activity Aw of the monitoring target (16) is adjusted to a value within a second predetermined range. The value within the second predetermined range is a value at which the Maillard reaction of the monitoring target (16) proceeds more quickly than that of the monitoring target (16) that having not undergone the dehydration process. In the dehydration process, for example, a water absorbing sheet, a dehydration sheet, or the like is used to reduce the moisture which is free water on the surface of the monitoring target (16). In this case, the promotion mechanism (120) includes a transport member such as a conveyor for conveying the monitoring target (16). The transport member conveys the monitoring target (16) to the location of the water absorbing sheet made of a polymer material, and then the water absorbing sheet is wound around the monitoring target (16) to cause the polymer to adsorb the moisture in the monitoring target (16), whereby the dehydration process of the monitoring target (16) is performed. The promotion mechanism (120) may include, e.g., a near-infrared spectrometer, which measures the moisture in the monitoring target (16) and determines whether the dehydration process of the monitoring target (16) has been completed or not based on a measuring result of the near-infrared spectrometer.

### <Fourth Example of Promotion Process>

In a fourth example of the promotion process, when the monitoring target (16) is a vegetable or a fruit, a pH-adjuster having a higher pH than that of the monitoring target (16) is added to the monitoring target (16) so that the pH of the monitoring target (16) is adjusted toward alkaline as compared to the pH of the monitoring target (16) that the pH-adjuster has not been added to. The monitoring target (16), which is a vegetable or a fruit, usually has a pH of about 7, and becomes alkaline by addition of a pH-adjuster. Consequently, the monitoring target (16) is more likely to produce the Maillard reaction.

### <Fifth Example of Promotion Process>

In a fifth example of the promotion process, the monitoring target (16) is irradiated with light. Irradiated with light, the monitoring target (16) is more likely to produce the Maillard reaction. In this case, the promotion mechanism (120) includes, e.g., a light source, which irradiates the monitoring target (16) with light for a predetermined time.

The promotion process may be performed manually by the operator.

### <Variation of First Example Operation of Controller>

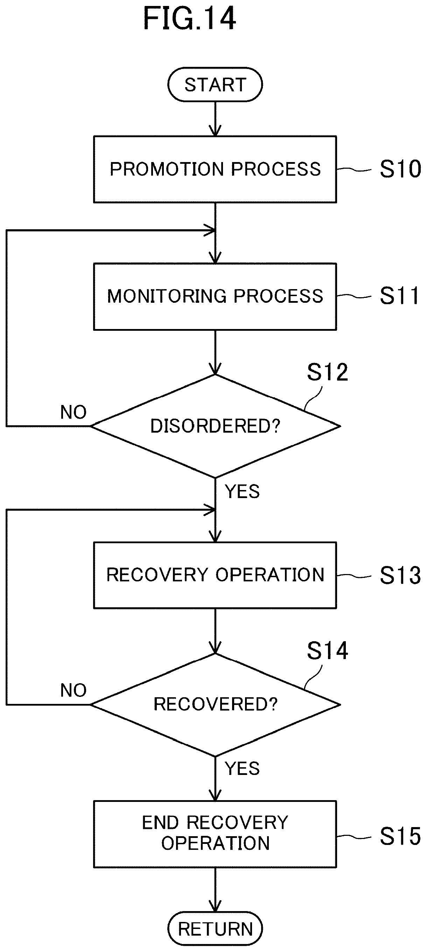

A variation of the first example operation (see FIG. 7) of the controller (110) will be described. As shown in FIG. 14, in the variation of the first example operation, the promotion process described above is performed in step S10 before the monitoring process (step S11). Accordingly, in the monitoring step of step S11, the monitoring target (16) having undergone the promotion process is monitored. Consequently, in the monitoring step, the monitoring target (16) can be disordered earlier than the stored items (15). This effectively enables the stored items (15) to be less likely to be disordered.

### <Variation of Second Example Operation of Controller>

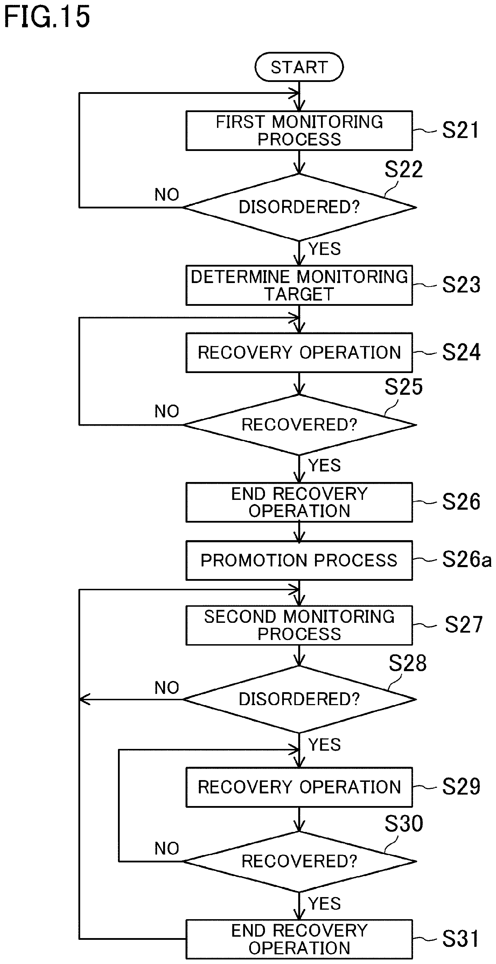

A variation of the second example operation (see FIG. 12) of the controller (110) will be described. As shown in FIG. 15, in the variation of the second example operation, after the end of the process shown in step S26, the process proceeds to step S26a. In step S26a, the monitoring target (16) determined in step S23 undergoes the promotion process. After the end of the process shown in step S26a, the process proceeds to step S27. Accordingly, in the second monitoring step of step S27, the monitoring target (16) having undergone the promotion process is monitored. In the second monitoring step, this more effectively enables the monitoring target (16) to be disordered earlier than the stored items (15). This effectively enables the stored items (15) to be less likely to be disordered.

### <<Other Embodiments>>

While the embodiments and the variations thereof have been described above, it will be understood that various changes in form and details may be made without departing from the spirit and scope of the claims (e.g., the item (1) below). The embodiments and the variations thereof may be combined and replaced with each other without deteriorating intended functions of the present disclosure.

(1) In the first to third embodiments, the irradiator (60) and the extractor (70) are used when the imager (80) captures an image of the monitoring target (16), an image of the stored items (15), and the like (see FIG. 5). However, the present invention is not limited to this. The irradiator (60) and/or the extractor (70) are not necessarily used. Specifically, the first embodiment and the second embodiment only need to have the controller (110) that can determine whether there is a disorder or not based on an image captured by the imager (80), and it is not limited whether to use the irradiator (60) and/or the extractor (70).

### INDUSTRIAL APPLICABILITY

As described above, the present disclosure is useful for a management device and a method for controlling the environment in a storehouse.

### DESCRIPTION OF REFERENCE CHARACTERS

- 4: Management Device
- 15: Stored Item
- 16: Monitoring Target
- 80: Imager
- 110: Controller
- 5: Storehouse
- Z: Image

## Claims

1. A method for controlling an environment in a storehouse (S) storing a stored item (15), the method comprising:
monitoring a monitoring target (16) with the stored item (15) and the monitoring target (16) stored in the storehouse (S); and
controlling the environment in the storehouse (S) based on a result of monitoring the monitoring target (16),
the monitoring target (16) being disordered due to the environment earlier than the stored item (15).

2. A method for controlling an environment in a storehouse (S) storing a stored item (15), the method comprising:
monitoring a monitoring target (16) with the stored item (15) and the monitoring target (16) stored in the storehouse (S); and
controlling the environment in the storehouse (S) based on a result of monitoring the monitoring target (16),
the monitoring target (16) being located in a place including an environment where the monitoring target (16) is more likely to be disordered as compared to a place where the stored item (15) is located.

3. The method of claim 1 or 2, wherein
the monitoring target (16) is of a different type from the stored item (15).

4. The method of any one of claims 1 to 3, wherein
the monitoring target (16) is disordered due to the Maillard reaction.

5. The method of any one of claims 1 to 4, wherein
the monitoring target (16) is one that was disordered in the past and then has been recovered from the disorder.

6. The method of any one of claims 1 to 5, wherein
the monitoring target (16) is of a same type as the stored item (15).

7. The method of any one of claims 1 to 6, wherein
the monitoring includes
capturing an image (Z) of the monitoring target (16) and outputting a result of monitoring the monitoring target (16) based on the image (Z) of the monitoring target (16).

8. The method of claim 7, wherein
the image (Z) of the monitoring target (16) is a fluorescence image of fluorescence emitted from a surface of the monitoring target (16) by irradiating the monitoring target (16) with light.

9. The method of any one of claims 1 to 8, further comprising:
performing a promotion process for promoting occurrence of a disorder of the monitoring target (16).

10. The method of claim 9, wherein
the monitoring includes monitoring the monitoring target (16) having undergone the promotion process.

11. The method of claim 9 or 10, wherein
the promotion process includes adding a pH-adjuster to the monitoring target (16).

12. The method of claim 9 or 10, wherein
the promotion process includes adding a fat, a sugar, or an amino acid to the monitoring target (16).

13. The method of claim 9 or 10, wherein
the promotion process includes a dehydration process for reducing moisture in the monitoring target (16).

14. The method of claim 9 or 10, wherein
the monitoring target (16) is a vegetable or a fruit, and
the promotion process includes adding a pH-adjuster having a higher pH than that of the monitoring target (16) to the monitoring target (16).

15. The method of claim 9 or 10, wherein
the promotion process includes irradiating the monitoring target (16) with light.

16. A management device for managing a plurality of stored items (15) stored in a storehouse (S), the management device comprising:
an imager (80); and
a controller (110) having a plurality of operation modes,
the plurality of operation modes including
a first mode of determining the monitoring target (16), which is one of the plurality of stored items (15) that has been disordered first, based on an image (Z) of the plurality of stored items (15) captured by the imager (80).

17. The management device of claim 16, wherein
the plurality of operation modes include
a second mode of controlling an environment in the storehouse (S) in order to recover the monitoring target (16) from the disorder caused in the first mode.

18. The management device of claim 17, wherein
the plurality of operation modes include
a third mode of monitoring the monitoring target (16) based on the image (Z) of the monitoring target (16) captured by the imager (80), and controlling the environment in the storehouse (S) based on a result of monitoring the monitoring target (16).

19. The management device of any one of claims 16 to 18, further comprising:
a promotion mechanism (120) configured to perform a promotion process for promoting occurrence of a disorder of the monitoring target (16).
